(19) Europäisches Patentamt / European Patent Office / Office européen des brevets

(11) **EP 3 796 787 B1**

(12) **EUROPEAN PATENT SPECIFICATION**

(45) Date of publication and mention
of the grant of the patent:
**24.08.2022 Bulletin 2022/34**

(21) Application number: **19726507.7**

(22) Date of filing: **24.04.2019**

(51) International Patent Classification (IPC):
**A23L 5/10** (2016.01)  **A23L 7/109** (2016.01)
**A47J 27/06** (2006.01)  **A47J 27/08** (2006.01)
**A47J 27/04** (2006.01)  **A47J 27/14** (2006.01)
**A47J 27/16** (2006.01)  **A47J 27/00** (2006.01)

(52) Cooperative Patent Classification (CPC):
**A23L 7/111; A23L 5/13; A47J 27/04;**
A47J 2027/008

(86) International application number:
**PCT/IB2019/053390**

(87) International publication number:
**WO 2019/207509 (31.10.2019 Gazette 2019/44)**

(54) **COOKING SYSTEM**

KOCHSYSTEM

SYSTÈME DE CUISSON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.04.2018 IT 201800004842**

(43) Date of publication of application:
**31.03.2021 Bulletin 2021/13**

(73) Proprietor: **Pastificio Rana S.p.A.**
**37057 San Giovanni Lupatoto (Verona) (IT)**

(72) Inventor: **RANA, Gian Luca**
**37057 San Giovanni Lupatoto (VR) (IT)**

(74) Representative: **Eccetto, Mauro et al**
**Studio Torta S.p.A.**
**Via Viotti, 9**
**10121 Torino (IT)**

(56) References cited:
EP-A1- 0 258 374     EP-A1- 1 164 868
EP-A1- 2 606 776     EP-A2- 0 273 323
US-A1- 2010 151 092     US-A1- 2016 220 058

**Description**

CROSS-REFERENCE TO RELATED APPLICATIONS

This Patent Application claims priority from Italian Patent Application No. 102018000004842 filed on April 24, 2018.

TECHNICAL FIELD

The invention relates to a cooking system for cooking pasta.

CONTEXT OF THE INVENTION

In the catering industry (for example, restaurants and diners), operators usually have a given quantity of at least partially pre-cooked pasta available and complete the cooking thereof or heat it in boiling water after having received a customer's order.

Even though this reduces customers' waiting times to only a few minutes, the organoleptic, nutritional and hygienic properties of the served product cannot be compared to the organoleptic, nutritional and hygienic properties of a product completely cooked when the order is received. To this regard, it should be pointed out that the cooking finishing (or heating) step is often carried out always using the same water.

Furthermore, the cooking of the type described above requires a complicated apparatus (for example, boilers and exhaust hoods), which is significantly large and expensive.

In any case, even with this technique, food preparation times (which usually are much longer than two minutes) certainly are not optimal. One example of known systems is shown in EP 0 273 323 A2. This document discloses a machine for cooking pasta, comprising a number of cooking stations each comprising: a container 11, with a bottom wall and a top opening opposite to said bottom, for containing the pasta to be cooked; first and second dosing devices comprised in the valve assembly 30 for independently dosing hot water from a supply 31 and steam from a supply 32, respectively. The water supply and steam supply are both connected to a duct 15 extending into a pipe 16 from which water and/or steam are injected into the container 12 at its bottom.

The object of the invention is to provide a cooking system, which is conceived so as to at least partially overcome the drawbacks of the prior art and, at the same time, is easy and economic to be implemented.

SUMMARY

According to the invention, there is provided a system for cooking pasta with typically a humidity content of at least 20% by weight with respect to the weight of the pasta; the system comprises:

a container, which is configured to contain a given quantity of pasta; the container comprising a base wall and one single opening opposite the base wall;
a pasta cooking machine comprising:

a first dosing device to feed a given quantity of liquid water into the container; the first device being configured to feed a given quantity of liquid water at a temperature of at least 50°C to the container and comprising a first duct, a first nozzle arranged at an end of the first duct to release the water into the container, and a feeding assembly to convey the water along the first duct to the first nozzle;
a second dosing device to feed a given quantity of water vapour into the container; the second device comprising a second duct, a second nozzle arranged at an end of the second duct to emit the water vapour, and a boiler to feed water vapour along the second duct to the second nozzle, wherein the container is separable from the machine and the first and the second nozzle at least partially extend inside the container through the opening.

Thanks to the invention, the pasta is cooked in a quick and fast manner.

According to the invention, the introduction of water and vapour into the container takes place by means of two different nozzles, which extend inside the container through the opening and thanks to which the first and the second device are able to feed water and vapour into the container at the same time and in an independent manner, thus making the system flexible and allowing a plurality of cooking procedures to be carried out.

In particular, the quick and combined action of the water and the vapour allows for a significant reduction of cooking times. A cooking cycle can typically be completed in an amount of time significantly below one minute.

The obtained cooked pasta has organoleptic and nutritional properties that are absolutely comparable with -

or even better than - the ones of the pasta cooked with the traditional method with one single step in boiling water, without pre-cooking.

In order to cook each given quantity of pasta, preferably cooked in single servings, a container is used, into which cooking water is introduced. By so doing, users avoid using the same container and/or the same cooking water for different servings of pasta, thus ensuring a hygienic quality suitable for cooked pasta.

Furthermore, the system according to the invention is relatively small-sized, cheap and easy to be implemented.

Preferably, the given quantity of water is smaller, by weight, than the given quantity of pasta; preferably the pasta has a humidity content of at least 22%, in particular up to 30%, by weight with respect to the weight of the pasta.

In this way, the pasta is cooked in a quick and homogeneous manner.

According to a preferred embodiment, the opening is configured to allow part of the water vapour to flow out of the container.

In this way, the pressure inside the container is prevented from excessively increasing.

According to a preferred embodiment, the container and the second dosing device are configured so that the pressure inside the container is greater than the atmospheric pressure, in particular greater than 1 bar.

In this way, the container is partially pressurized so as to allow the pasta to be cooked in a quick and homogeneous manner.

In particular, the second dosing device is configured to emit water vapour having a vapour quality smaller than 0.9, in particular smaller than 0.8.

In particular, the ratio between the weight of the given quantity of water and the weight of the given quantity of pasta ranges from 0.30 to 0.95, in particular from 0.35 to 0.90.

In particular, the feeding assembly comprises a pump and a flow meter to measure the quantity of water flowing along the first duct.

In this way, the water can be fed in the first duct and the flow rate of the water flowing in the first duct can be controlled.

More in detail, the feeding assembly also comprises a first flow adjuster, in particular a valve, to adjust the quantity of water flowing along the first duct.

In this way, the quantity of water flowing along the first duct and, hence, emitted by the first nozzle can be adjusted with great precision.

More in detail, the second device comprises a second flow adjuster, in particular a valve, to adjust the water vapour emitted by the second nozzle.

In this way, the quantity of vapour flowing along the second duct and, hence, emitted by the second nozzle can be adjusted with great precision.

Preferably, the machine comprises a lid, which is configured to at least partially cover the opening.

In this way, the lid allows the container to be pressurized during the cooking process and, at the same time, prevents external agents from getting into the container.

In particular, the lid completely covers said opening and has an outlet passage, which establishes a communication between the inside of the container and the outside and has an area ranging from 0.09 $cm^2$ to 0.95 $cm^2$.

In this way, the outlet passage allows the vapour contained inside the container to be let out so as to prevent the pressure inside the container from excessively increasing.

In particular, the lid completely covers said opening and is provided with control means, which are configured to let out gas from the inside of the container when the pressure inside the container exceeds a reference value.

In this way, the value of the pressure inside the container can be controlled with great precision so as to prevent it from exceeding a predetermined threshold.

According to a preferred embodiment, the first and the second device, in particular the first and the second nozzle, extend through the lid.

In this way, water and vapour can be introduced into a substantially closed compartment delimited by the container and by the lid.

In particular, the system comprises a moving device to move at least one between the container and the lid relative to the other one, so as to move them close to and away from one another.

In this way, the relative position between the container and the lid can be changed.

Said change in the relative position between the container and the lid allows the container to be placed in a predefined position in a simple and precise manner.

In particular, the moving device is configured to move the container towards the lid or away from the lid.

In this way, the position of the container can be changed, while the lid remains still.

In particular, the moving device is configured to exert a given force upon the lid and/or upon the container so as to keep the lid in contact with an upper edge of the container, even when the second device is operated.

In this way, a certain seal can be obtained, thus limiting the outlet of vapour between the edge of the container and the lid.

According to a preferred embodiment, the cooking system comprises at least one control unit, which is configured to control the first and the second dosing devices so as to feed the given quantity of liquid water and the given quantity of water vapour; in particular, the control unit is configured to control the first and the second dosing devices so that the given quantity of liquid water is at least partially emitted before the given quantity of water vapour.

Thanks to the control unit, the first and the second dosing devices can be controlled separately, so that a plurality of different cooking processes can be carried out.

Furthermore, the control unit allows for a simultaneous emission of water and vapour.

According to a preferred embodiment, the container has a code, which identifies the pasta contained in the container and/or the operating parameters of the first and of the second device; the system comprises a reader, which is configured to detect the code; and a control unit, which is configured to select the parameters used by the first dosing device and by the second dosing device based on the information detected; in particular, the control unit is configured to select at least one parameter among: the given quantity of liquid water, the given quantity of water vapour, and the time during which the water vapour is fed to the container.

In this way, the control unit can determine the type of pasta contained in the container and/or the cooking parameters. In this configuration, the cooking system is capable of setting and automatically completing the cooking process without the intervention of a human operator. In particular, the cooking parameters are automatically set by the control unit based on the code detected by the reader.

BRIEF DESCRIPTION OF THE FIGURES

The invention will now be described with reference to the accompanying drawings, wherein:

- figure 1 shows a step of a cooking method;
- figure 2 shows a further step of the method of figure 1; and
- figure 3 schematically shows a cooking system according to a preferred embodiment of the invention. The process as such is not part of the invention.

DETAILED DESCRIPTION

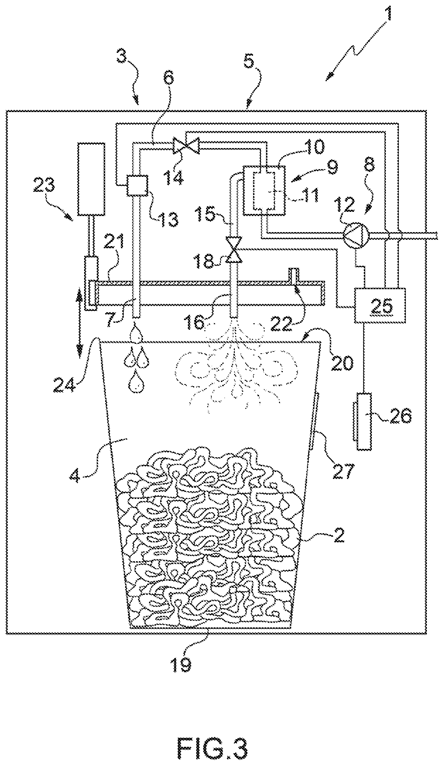

In figure 3, number 1 indicates, as a whole, a machine to cook (fresh) pasta 2. The machine 1 comprises a device 3 to feed liquid water to a container 4 (containing the pasta 2) and a device 5 to feed water vapour to the container 4. In particular, the device 3 is configured to feed hot water, more precisely water at a temperature of at least approximately 50°C (even more precisely, at least 60°C).

In use, the combined action of the device 3 to feed liquid water and of the device 5 to feed water vapour leads to a quick and homogeneous cooking of the pasta 2.

In particular, the device 3 acts like a dosing device to feed a given quantity of liquid water at a temperature of at least 50°C to the container 4; the device 5 acts like a dosing device to feed a given quantity of water vapour to the container 4; and the container 4 is configured to contain a given quantity of pasta 2.

According to an aspect of the invention, there is provided a system to cook pasta 2 comprising the devices 3 and 5 and the container 4.

According to the invention, the container 4 is separable (and separate) from the machine 1. More precisely, in use, the container 4 is changed every time the machine 1 is used. For example, the container 4 can be a disposable container. In some cases, the container 4 is made of a compostable material and/or has at least one transparent portion, so that the pasta 2 contained in it can be visible.

According to the invention, the device 3 comprises a duct 6, a nozzle 7 arranged at an end of the duct 6 so as to release water into the container 4 and a feeding assembly 8 to convey the water along the duct 6 to the nozzle 7.

Preferably, the device 3 also comprises a heating assembly 9, which is configured to heat the water emitted by the nozzle 7. More precisely, the heating assembly 9 comprises a boiler 10 and a heat exchanger 11 arranged inside the boiler 10.

In some cases, the boiler 10 is provided with a heater (which is known *per se and* is not shown herein - for example, an electrical resistance) to heat the water present inside the boiler 10 and cause it to evaporate.

According to some non-limiting embodiments, the feeding assembly 8 comprises a pump 12 and, advantageously, though not necessarily, a flow-meter 13 to measure the quantity of water flowing through the duct 6. In some cases, the feeding assembly 8 also comprises a flow adjuster 14 (in particular, a valve) to adjust (in a more precise manner) the quantity of water flowing along the duct 6 (and, hence, emitted by the nozzle 7).

According to the invention, the device 5 comprises a duct 15, a nozzle 16 arranged at an end of the duct 15 so as to emit the water vapour and the boiler 10 to feed water vapour along the duct 15 to the nozzle 16. Advantageously, though not necessarily, the boiler 10 of the device 5 is the same of the device 3 (in this way, manufacturers can save money and space). Alternatively, the devices 3 and 5 comprise different boilers.

Advantageously, though not necessarily, the device 5 comprises a flow adjuster 18 (in particular, a valve) to adjust the water vapour emitted by the nozzle 16 (more precisely, the quantity of vapour flowing along duct 15 and, hence, emitted by the nozzle 16).

The introduction of water and vapour into the container 4 takes place by means of two different nozzles, the nozzle 7 and the nozzle 16, respectively. In this configuration, the devices 3 and 5 are capable of simultaneously feeding water and vapour into the container 4, thus making the machine 1 flexible and allowing a plurality of different cooking processes to be implemented.

According to the invention, the container 4 comprises a base wall 19 and a sole opening 20 opposite the base wall 19.

Thanks to this configuration, the devices 3 and 5 and, in particular, the nozzles 7 and 16 at least partially extend inside the container 4 through the opening 20.

Advantageously, though not necessarily, the machine 1 comprises a lid 21, which is configured to (at least) partially cover the opening 20.

In some cases (like the one shown herein), the lid 21 completely covers the opening 20 and has a (sole) outlet passage 22, which establishes a communication between the inside of the container 4 and the outside. In particular, the area of the cross section of the outlet passage 22 ranges from approximately 0.09 $cm^2$ to approximately 0.95 $cm^2$.

According to some non-limiting embodiments, the lid 21 is provided (in the area of the outlet passage 22) with control means (for example, a relief valve) configured to let out gas from the inside of the container 4 when the pressure inside the container 4 exceeds a reference value.

More precisely, though not necessarily, the devices 3 and 5 (even more precisely, the nozzles 7 and 16) extend through the lid 21.

Advantageously, though not necessarily, the machine 1 comprises a moving device 23 (in particular, at least one fluid-dynamic actuator) to move at least one between the container 4 and the lid 21 relative to the other one (so as to move them close to and away from one another).

In the embodiment shown in figure 3, the moving device 23 is connected to and configured to move the lid 21. According to further embodiments, which are not shown herein, the moving device 23 is configured to move the container 4 towards the lid 21 or away from the lid 21.

In particular, the moving device 23 is configured to exert a given force (upon the lid 21 and/or upon the container 4) so as to keep the lid 21 in contact with an upper edge 24 of the container 4 (even when the device 5 is operated). More precisely, by so doing, a certain seal between the edge 24 and the lid 21 is obtained (thus, limiting the possibility of gas flowing out).

As an alternative or in addition, retaining means are provided, which limit the relative movement of the lid 21 and of the container 4 once the lid 21 comes into contact with the edge 24.

According to a preferred embodiment,the machine 1 (in particular, the system to cook pasta 2) also comprises a control unit 25 to control the operation of the device 3 and of the device 5.

More precisely, the control unit 25 (which - at least partly - is a component of the device 3) is configured to control the flow adjuster 14 (and, if necessary, the pump 12), in particular depending on the data detected by the flow-meter 13.

As an alternative or in addition, the control unit 25 (which - at least partly - is a component of the device 5) is configured to control the flow adjuster 18.

According to some non-limiting embodiments, the control unit 25 is configured to (also) control the moving device 23.

Advantageously, though not necessarily, the machine 1 also comprises a reader 26, which is configured to detect a code applied to the container 4. This code typically is a code identifying the pasta 2 contained in the container 4 and/or the operating parameters of the devices 3 and 5 (for example, quantity of water and/or duration of the operation of the device 5) which must be used to cook said pasta 2.

According to different non-limiting embodiments, the code can be available in the form of a barcode 27 and/or recorded in a (RFID) transponder 27 applied to the container 4.

In particular, the control unit 25 is configured to control the devices 3 and 5 depending on the data detected by the reader 26.

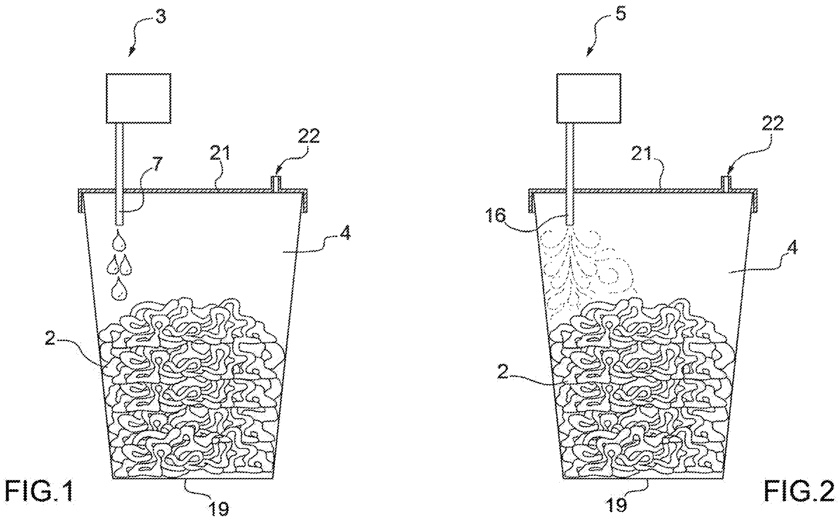

A cooking process to cook pasta 2 in the system according to the invention is described. The process per se is not part of the invention. The process comprises a water feeding step (figure 1), during which a given quantity of liquid water at a temperature of at least approximately 50°C (in particular, at least approximately 55°C; more in particular, up to approximately 80°C; even more in particular, up to approximately 90°C) is fed to a container 4 (as defined above); and a vapour feeding step (figure 2), during which a given quantity of water vapour is fed to the container 4 containing a given quantity of pasta 2 for an amount of time ranging from approximately 7 to approximately 50 seconds (in particular, from 10 to 35 seconds); the vapour feeding step is at least partially simultaneous with or subsequent to the water feeding step.

Thanks to the configuration according to the invention, the machine 1 allows for the simultaneous delivery of water and vapour into the container 4.

In particular, thanks to the combined action of the water and of the vapour, the cooking times are significantly reduced relative to the previous ones. Furthermore, the process can be implemented by a machine 1 that is relatively small and cheap.

The pasta 2 present (or inserted) inside the container 4 is substantially raw (was not subjected to a pre-cooking step).

In particular, during the vapour feeding step, the given quantity of water vapour is fed to the container 4 so as to cook the pasta 2 contained therein.

More precisely, the given quantities of liquid water, water vapour and (fresh) pasta 2 are selected in such a way that the pasta 2 is properly cooked, but, at the same time, a substantially irrelevant quantity of water is left in the container 4.

In particular, the pasta 2 has a humidity content of at least approximately 20% by weight relative to the total weight of the pasta. Advantageously, though not necessarily, the pasta 2 has a humidity content of at least approximately 22% (more precisely, at least approximately 24%), in particular up to approximately 40% (more precisely, up to approximately 35%), by weight relative to the total weight of the pasta.

According to some non-limiting examples, the pasta 2 has a water activity (Aw) of at least approximately 0.85 (more precisely, at least approximately 0.89). In particular, the pasta 2 has a water activity (Aw) ranging from approximately 0.90 (more precisely, from 0.91) to approximately 0.98 (more precisely, to 0.97).

Alternatively, the pasta 2 has a water activity (Aw) up to approximately 0.91 (in particular, up to approximately 0.92). In particular (in these cases), the pasta 2 has a humidity content of at least approximately 20% (more precisely, at least approximately 22%) by weight relative to the total weight of the pasta. More in particular (in these cases), the pasta 2 has a humidity content up to 24% (more precisely, up to 23%) by weight relative to the total weight of the pasta.

By "weight of the pasta" or "total weight of the pasta" we mean the weight of the pasta (2) without considering possible further components (for example, the filling of filled pasta). Similarly, said humidity and/or water activity are considered only in relation to the pasta components, without taking into account possible further components (for example, the filling of filled pasta).

In this text, we consider the water activity (at 25°C) measured according to the provisions set forth by standard ISO 18787:2017.

As it is known, the water activity is:

$$a_w = \frac{p_v}{P^*} \quad (1.1.1)$$

wherein:

- $p_v$ is the vapour pressure of water inside the food (Pa)
- $P^*$ is the vapour pressure of pure water at the same temperature (Pa).

The humidity percentage of the pasta 2 is measured by calculating (in accordance with what is deemed to be usual) the ratio between the difference between the weight of an initial sample and the weight of the same sample subjected to drying (after nor more weight variation can be observed any longer) and the weight of the initial sample. In particular, the humidity of the pasta is measured as provided for by ASTM C566.

According to the invention, the container 4 comprises at least one opening 20, through which, during the vapour feeding step, (at least) part of the water vapour flows out of the container 4. More precisely, the container 4 is of the type described above.

Advantageously, though not necessarily, during the vapour feeding step, a lid 21 (in particular, of the type described above) at least partially covers the opening 20 in order to reduce the outlet of water vapour from the container 4.

According to some non-limiting embodiments, the lid 21 completely covers said opening and has an outlet passage, which establishes a communication between the inside of the container and the outside and, in particular, has an area ranging from approximately 0.09 cm$^2$ to approximately 0.95 cm$^2$.

In some cases, the lid 21 is provided (in the area of the outlet passage 22) with control means (for example, a relief valve), which let out gas from the inside of the container 4, during the vapour feeding step, when the pressure inside the container 4 exceeds a reference value.

Advantageously, though not necessarily, during at least part of the vapour feeding step, the pressure inside the container 4 is greater than atmospheric pressure, in particular it is greater than approximately 1 bar (more precisely, greater than approximately 1.001 bar), more in particular it is up to 1.2 bar.

Advantageously, though not necessarily, the water vapour has a vapour quality (namely, as it is known, the ratio between the vapour mass and the total mass of liquid plus vapour) smaller than approximately 0.9, in particular smaller than approximately 0.8.

According to some non-limiting embodiments, the given quantity of water is smaller, by weight, than the given quantity of pasta 2.

In particular, the ratio between the weight of the given quantity of water and the weight of the given quantity of pasta 2 ranges from approximately 0.30 to approximately 0.95, in particular from approximately 0.35 to approximately 0.90.

Advantageously, though not necessarily, the ratio between the weight of the given quantity of vapour and the given quantity of pasta 2 ranges from approximately 0.04 to approximately 0.25, in particular from approximately 0.06 to approximately 0.20.

Advantageously, though not necessarily, during the vapour feeding step, the vapour is fed to the container 4 at a pressure of approximately at least 1.5 bar, more in particular ranging from approximately 2.5 bar to approximately 4 bar.

According to the process carried out in the system according to the invention, during the water feeding step, a nozzle 7 (in particular, as defined above) feeds the given quantity of liquid water into the container 4. During the vapour feeding step, a nozzle 16 (in particular, as defined above) feeds the given quantity of water vapour into the container 4.

Advantageously, though not necessarily, the vapour feeding step is (at least partially) subsequent to the water feeding step.

In particular, during the water feeding step, the given quantity of liquid water is fed to the container 4 containing the given quantity of pasta 2. In these cases, preferably, though not necessarily, the pasta 2 is left in the liquid water, before the vapour feeding step, for an amount of time shorter than approximately 40 seconds (more precisely, shorter than approximately 30 seconds).

According to some examples, the process comprises an addition step, which is subsequent to the vapour feeding step and during which a sauce (for example a meat and/or vegetable sauce) is added to the pasta 2 (present in the container 4), which has already been subjected to the water feeding step and to the vapour feeding step.

In particular, the process also comprises a sauce heating step, which is prior to the addition step and during which the sauce is heated. Alternatively, the sauce can be added cold.

According to specific examples, the given quantity of pasta inside the container has a weight ranging from approximately 70 (in particular, from approximately 80) to approximately 150 (in particular, to approximately 120) grams; the given quantity of liquid water has a weight ranging from approximately 30 (in particular, from approximately 40) to approximately 130 (in particular, to approximately 90) grams; the given quantity of vapour has a weight raging from approximately 4 (in particular, from approximately 6) to approximately 25 (in particular, approximately 20) grams.

The quantities of pasta 2, water and vapour (more precisely, the relative ratios by weight, the ratio between the weight of the pasta 2 and the vapour dispensing time) and other parameters (such as, for example, the temperature of the water fed to the container 4 and/or the pressure at which the vapour is dispensed into the container 4) can be changed (adjusting them) based on the needs and depending on the different types of pasta 2 used.

Advantageously, though not necessarily, the container 4 has a code (in particular, as defined above). The process also comprises a detection step, during which the code is detected, and a condition selection step, during which the parameters used during the liquid water feeding step and the water vapour feeding step are selected based on the detected code. In particular, during the condition selection step, at least one among the following parameters is selected: the given quantity of liquid water, the temperature of the liquid water, the given quantity of water vapour, the vapour dispensing pressure, the vapour quality, and the amount of time during which the water vapour is fed to the container (in other words, the time of duration of the vapour feeding step). More in particular, during the condition selection step, at least one among the following parameters is selected: the given quantity of liquid water, the given quantity of water vapour, and the amount of time during which the water vapour is fed to the container.

By implementing the process in the system according to the invention, users can obtain different advantages compared to the prior art. Among them there are the following advantages: the pasta 2 can surprisingly be cooked in an extremely short time (the finished dish can typically be served in an amount of time that is significantly shorter than one minute from the beginning of the preparation), with a relatively small and cheap machine; the obtained cooked pasta has organoleptic, nutritional and hygienic properties that are absolutely comparable with (or even better than) the ones of the pasta cooked with the traditional method with one single step in boiling water (namely, without pre-cooking).

As far as the hygienic aspect is concerned, the possibility of using a different (clean and/or new) container 4 for each new serving of pasta is particularly advantageous.

Please, note that the process according to the invention can be used in public eateries (for example, restaurants, diners, etc.), furthermore reducing the need for large and expensive apparatuses (such as the typical exhaust hoods). In these cases, customers can select the pasta 2 they want, which will be cooked right there and then by the operator using a clean (new) container 4, where customers can also, if necessary, directly eat.

Furthermore, the process carried out in the system according to the invention can also be implemented at home, so as to simplify the preparation of meals and significantly reduce cooking times.

Further features of the invention will be best understood upon perusal of the following description of a merely explanatory and non-limiting example.

### Example 1

This example describes specific tests concerning the implementation of the process described above. Water at a temperature of 60°C and, immediately after, vapour were fed to fresh pasta samples (humidity content exceeding 24% relative to the weight of the pasta) indicated in table 1 below and arranged inside a container 4 (as described above) . During the feeding of the vapour, the opening 20 of the container was completely closed by a lid 21 provided with an outlet opening 22 (with an area of approximately 0.2 cm$^2$)

A water feeding nozzle 7 and a vapour feeding nozzle 16 extended through the lid 21.

The quantity of water used and the vapour dispensing time of each test are indicated in table 1.

Table 1

| PASTA TYPE | PASTA (Gr) | VAPOUR (Sec) | WATER (Gr) |
|---|---|---|---|
| Tagliatelle | 100 | 15 | 82 |
| Fusilli | 100 | 15 | 82 |
| Spaghetti 1.8 mm | 100 | 15 | 82 |
| Tagliatelle | 100 | 25 | 82 |
| Cappelletti 0.45 mm | 100 | 15 | 41 |
| Spaghetti 1.6 mm | 100 | 35 | 82 |
| Fettuccine | 100 | 20 | 82 |
| Tagliatelle sfoglia grezza 0.85 mm | 100 | 10 | 82 |
| Cappelletti | 100 | 20 | 60 |

The obtained cooked pasta was blind-tested by a panel of three tasters compared to the same pasta cooked with a traditional method in boiling water in one single step (without pre-cooking). The panel was not able to distinguish (from the organoleptic point of view and from the point of view of the consistency) the pasta cooked with the two processes.

### Claims

1. A system for cooking pasta (2); the system comprising:

   a container (4), which is configured to contain a given quantity of pasta (2); the container (4) comprising a base wall (19) and one single opening (20) opposite the base wall (19);
   a pasta cooking machine (1) comprising:

   a first dosing device (3) to feed a given quantity of liquid water into the container (4); the first device (3) being configured to feed a given quantity of liquid water at a temperature of at least 50°C to the container (4) and comprising a first duct (6), a first nozzle (7) arranged at an end of the first duct (6) to release the water into the container (4), and a feeding assembly (8) to convey the water along the first duct (6) to the first nozzle (7);
   a second dosing device (5) to feed a given quantity of water vapour into the container (4); the second device (5) comprising a second duct (15), a second nozzle (16) arranged at an end of the second duct (15) to emit the water vapour, and a boiler (10) to feed water vapour along the second duct (15) to the second nozzle (16), wherein the container (4) is separable from the machine (1) and the first and the second nozzle (7, 16) at least partially extend inside the container (4) through the opening (20).

2. A system according to claim 1, wherein the opening (20) is configured to allow part of the water vapour to flow out of the container (4).

3. A system according to any one of the preceding claims, wherein the feeding assembly (8) comprises a pump (12) and a flow meter (13) to measure the quantity of water flowing along the first duct (6).

4. A system according to any one of the preceding claims, wherein the feeding assembly (8) also comprises a first flow adjuster (14), in particular a valve, to adjust the quantity of water flowing along the first duct (6).

5. A system according to any one of the preceding claims, wherein the second device (5) comprises a second flow adjuster (18), in particular a valve, to adjust the water vapour emitted by the second nozzle (16).

6. A system according to any one of the preceding claims, wherein the machine (1) comprises a lid (21), which is configured to at least partially cover the opening (20).

7. A system according to claim 6, wherein the lid (21) completely covers said opening (20) and has an outlet passage (22), which establishes a communication between the inside of the container (4) and the outside and has an area from 0.09 cm$^2$ to 0.95 cm$^2$.

8. A system according to claim 6 or 7, wherein the lid (21) completely covers said opening (20) and is provided with control means, which are configured to let out gas from the inside of the container (4) when the pressure inside the container (4) exceeds a reference value.

9. A system according to any one of the claims from 6 to 8, wherein the first and the second device (3, 5), in particular the first and the second nozzle (7, 16), extend through the lid (21).

10. A system according to any one of the claims from 6 to 9, and comprising a moving device (23) to move at least one between the container (4) and the lid (21) relative to the other one, so as to move them close to and away from one another.

11. A system according to claim 10, wherein the moving device (23) is configured to move the container (4) towards the lid (21) or away from the lid (21).

12. A system according to claim 10 or 11, wherein the moving device (23) is configured to exert a given force upon the lid (21) and/or upon the container (4) so as to keep the lid (21) in contact with an upper edge (24) of the container (4), even when the second device (5) is operated.

13. A system according to any one of the preceding claims and comprising at least one control unit (25), which is configured to control the first and the second dosing devices (3, 5) so as to feed the given quantity of liquid water and the given quantity of water vapour; in particular, the control unit (25) is configured to control the first and the second dosing devices (3, 5) so that the given quantity of liquid water is at least partially emitted before the given quantity of water vapour.

**Patentansprüche**

1. System zum Kochen von Teigwaren (2); wobei das System umfasst:

einen Behälter (4), der so ausgestaltet ist, dass er eine bestimmte Menge von Teigwaren (2) enthält; wobei der Behälter (4) eine Basiswand (19) und eine einzige Öffnung (20) umfasst, die der Basiswand (19) gegenüberliegt; eine Teigwaren-Kochmaschine (1), umfassend:

eine erste Dosiervorrichtung (3) zum Zuführen einer bestimmten Menge von flüssigem Wasser in den Behälter (4); wobei die erste Vorrichtung (3) so ausgestaltet ist, dass sie dem Behälter (4) eine bestimmte Menge von flüssigem Wasser mit einer Temperatur von mindestens 50 °C zuführt, und einen ersten Kanal (6), eine erste Düse (7), die so an einem Ende des ersten Kanals (6) angeordnet ist, dass sie das Wasser in den Behälter (4) abgibt, und eine Zuführanordnung (8) zum Befördern des Wassers entlang des ersten Kanals (6) zur ersten Düse (7) umfasst; eine zweite Dosiervorrichtung (5) zum Zuführen einer bestimmten Menge von Wasserdampf in den Behälter (4); wobei die zweite Vorrichtung (5) einen zweiten Kanal (15), eine zweite Düse (16), die so an einem Ende des zweiten Kanals (15) angeordnet ist, dass sie den Wasserdampf ausströmen lässt, und einen Kessel (10) zum Zuführen von Wasserdampf entlang des zweiten Kanals (15) zur zweiten Düse (16) umfasst, wobei der Behälter (4) von der Maschine (1) trennbar ist und die erste und die zweite Düse (7, 16) sich zumindest teilweise im Inneren des Behälters (4) durch die Öffnung (20) erstrecken.

2. System nach Anspruch 1, wobei die Öffnung (20) so ausgestaltet ist, dass sie das Strömen eines Teils des Wasserdampfs aus dem Behälter (4) zulässt.

3. System nach einem der vorhergehenden Ansprüche, wobei die Zuführanordnung (8) eine Pumpe (12) und einen Strömungsmesser (13) zum Messen der Menge von Wasser, das entlang des ersten Kanals (6) strömt, umfasst.

4. System nach einem der vorhergehenden Ansprüche, wobei die Zuführanordnung (8) auch einen ersten Strömungseinsteller (14), insbesondere ein Ventil, zum Einstellen der Menge von Wasser, das entlang des ersten Kanals (6) strömt, umfasst.

5. System nach einem der vorhergehenden Ansprüche, wobei die zweite Vorrichtung (5) einen zweiten Strömungseinsteller (18), insbesondere ein Ventil, zum Einstellen des von der zweiten Düse (16) ausströmenden Wasserdampfs umfasst.

6. System nach einem der vorhergehenden Ansprüche, wobei die Maschine (1) einen Deckel (21) umfasst, der so ausgestaltet ist, dass er die Öffnung (20) zumindest teilweise bedeckt.

7. System nach Anspruch 6, wobei der Deckel (21) die Öffnung (20) vollständig bedeckt und einen Auslassdurchgang (22) aufweist, der eine Verbindung zwischen dem Inneren des Behälters (4) und dem Äußeren herstellt und eine Fläche von 0,09 cm$^2$ bis 0,95 cm$^2$ aufweist.

8. System nach Anspruch 6 oder 7, wobei der Deckel (21) die Öffnung (20) vollständig bedeckt und mit Steuermitteln versehen ist, die so ausgestaltet sind, dass sie Gas vom Inneren des Behälters (4) ablassen, wenn der Druck im Inneren des Behälters (4) einen Bezugswert überschreitet.

9. System nach einem der Ansprüche 6 bis 8, wobei die erste und die zweite Vorrichtung (3, 5), insbesondere die erste und die zweite Düse (7, 16), sich durch den Deckel (21) erstrecken.

10. System nach einem der Ansprüche 6 bis 9 und das eine Bewegungsvorrichtung (23) zum Bewegen mindestens eines des Behälters (4) und/oder des Deckels (21) in Bezug aufeinander umfasst, sodass sie nahe aufeinander zu und voneinander weg bewegt werden.

11. System nach Anspruch 10, wobei die Bewegungsvorrichtung (23) so ausgestaltet ist, dass sie den Behälter (4) hin zum Deckel (21) oder vom Deckel (21) weg bewegt.

12. System nach Anspruch 10 oder 11, wobei die Bewegungsvorrichtung (23) so ausgestaltet ist, dass sie eine bestimmte Kraft auf den Deckel (21) und/oder auf den Behälter (4) ausübt, sodass der Deckel (21) sogar dann mit einem oberen Rand (24) des Behälters (4) in Kontakt gehalten wird, wenn die zweite Vorrichtung (5) betätigt wird.

13. System nach einem der vorhergehenden Ansprüche und das mindestens eine Steuereinheit (25) umfasst, die so ausgestaltet ist, dass sie die erste und die zweite Dosiervorrichtung (3, 5) so steuert, dass die bestimmte Menge von flüssigem Waser und die bestimmte Menge von Wasserdampf zugeführt werden; wobei die Steuereinheit (25) insbesondere so ausgestaltet ist, dass sie die erste und die zweite Dosiervorrichtung (3, 5) so steuert, dass die bestimmte Menge von flüssigem Wasser zumindest teilweise vor der bestimmten Menge von Wasserdampf ausströmt.

**Revendications**

1. Système de cuisson de pâtes (2) ; le système comprenant :

un récipient (4) configuré pour contenir une quantité donnée de pâtes (2) ; le récipient (4) comprenant une paroi de base (19) et une seule ouverture (20) en vis-à-vis de la paroi de base (19) ;
une machine à cuisson des pâtes (1) comprenant :

un premier dispositif de dosage (3) pour fournir une quantité donnée d'eau au récipient (4) ; le premier dispositif (3) étant configuré pour fournir une quantité donnée d'eau liquide à une température d'au moins 50°C au récipient (4) et comprenant un premier conduit (6), une première buse (7) disposée à une extrémité du premier conduit (6) pour libérer l'eau dans le récipient (4) et un ensemble d'alimentation (8) pour acheminer l'eau à travers le premier conduit (6) vers la première buse (7) ;
un second dispositif de dosage (5) pour fournir une quantité donnée de vapeur d'eau au récipient (4) ; le second dispositif (5) comprenant un second conduit (15), une seconde buse (16) disposée à une extrémité du second conduit (15) pour émettre la vapeur d'eau et un bouilleur (10) pour fournir de la vapeur d'eau à travers le second conduit (15) à la seconde buse (16), dans lequel le récipient (4) est séparable de la machine (1) et la première et la seconde buses (7, 16) s'étendent au moins partiellement à l'intérieur du récipient (4) à travers l'ouverture (20).

2. Système selon la revendication 1, dans lequel l'ouverture (20) est configurée pour permettre à une partie de la vapeur d'eau de s'échapper du récipient (4) .

3. Système selon l'une quelconque des revendications précédentes, dans lequel l'ensemble d'alimentation (8) comprend une pompe (12) et un débitmètre (13) pour mesurer la quantité d'eau s'écoulant dans le premier conduit (6).

4. Système selon l'une quelconque des revendications précédentes, dans lequel l'ensemble d'alimentation (8) comprend également un premier régulateur de débit (14), en particulier une soupape, pour réguler la quantité d'eau s'écoulant hors du premier conduit (6) .

5. Système selon l'une quelconque des revendications précédentes, dans lequel le second dispositif (5) comprend un second régulateur de débit (18), en particulier une soupape, pour réguler la vapeur d'eau émise par la seconde buse (16).

6. Système selon l'une quelconque des revendications précédentes, dans lequel la machine (1) comprend un couvercle (21), configuré pour recouvrir au moins partiellement l'ouverture (20).

7. Système selon la revendication 6, dans lequel le couvercle (21) recouvre complètement ladite ouverture (20) et présente un passage de sortie (22) qui établit une communication entre l'intérieur du récipient (4) et l'extérieur et présente une surface comprise entre 0,09 cm$^2$ et 0,95 cm$^2$.

8. Système selon la revendication 6 ou 7, dans lequel le couvercle (21) recouvre complètement ladite ouverture (20) et est pourvu de moyens de commande configurés pour laisser s'échapper du gaz de l'intérieur du récipient (4) quand la pression dans le récipient (4) dépasse une valeur de référence.

9. Système selon l'une quelconque des revendications 6 à 8, dans lequel le premier et le second dispositifs (3, 5), en particulier la première et la seconde buses (7, 16), s'étendent à travers le couvercle (21).

10. Système selon l'une quelconque des revendications 6 à 9, et comprenant un dispositif mobile (23) destiné à déplacer au moins l'un du récipient (4) et du couvercle (21) par rapport à l'autre, de manière à les rapprocher et à les éloigner l'un de l'autre.

11. Système selon la revendication 10, dans lequel le dispositif mobile (23) est configuré pour déplacer le récipient (4) vers le couvercle (21) ou l'éloigner du couvercle (21).

12. Système selon la revendication 10 ou 11, dans lequel le dispositif mobile (23) est configuré pour exercer une force donnée sur le couvercle (21) et/ou sur le récipient (4) pour maintenir le couvercle (21) en contact avec un bord supérieur (24) du récipient (4), même quand le second dispositif (5) est en fonctionnement.

13. Système selon l'une quelconque des revendications précédentes et comprenant au moins un module de commande (25), configuré pour commander le premier et le second dispositifs de dosage (3, 5) de manière à fournir la quantité donnée d'eau liquide et la quantité donnée de vapeur d'eau ; en particulier, le module de commande (25) est configuré pour commander le premier et le second dispositifs de dosage (3, 5) pour que la quantité donnée d'eau liquide soit au moins partiellement émise avant la quantité donnée de vapeur d'eau.

FIG.2

FIG.1

FIG.3

**EP 3 796 787 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102018000004842
- EP 0273323 A2